# EUROPEAN PATENT APPLICATION

(11) **EP 1 061 423 A1**
(43) Date of publication of application: **20.12.2000**
(21) Application number: 99201804.4
(22) Date of filing: 07.06.1999
(51) Int. Cl.: G05B 19/042

(54) **Method for designing strategies for the regulation and control of an industrial process**

(71) Applicant: ABB Research Ltd., 8050 Zürich (CH)
(72) Inventor: Ceiner, Guido, 20141 Milano (IT); Lorito, Fabrizio, 20135 Milano (IT); Scafati, Giuseppe, 00189 Roma (IT); Danieli, Massimo, 37138 Verona (IT); Ferrarini, Luca, 46043 Castogöopme deööe Stiviere (MN) (IT); Maffezzoni, Claudio, 26100 Cremona (IT)
(74) Representative: Giavarini, Francesco

(57) **Abstract**

A method for designing strategies for the regulation and control of an industrial process characterised by the fact of comprising the following phases:
- importing automatically information regarding the industrial process and its related control functions;
- executing, in said first predefined computerised support, a selection of the imported information:
- executing a logic decomposition of the industrial process into a plurality of modules and introducing, into one or more of said modules, the information imported in the previous phases.

## Description

The present invention relates to a method for designing strategies for the control and regulation of an industrial process. More particularly, the present invention relates to a method allowing to input automatically, in a predefined computerised support, information regarding the industrial process and its related control functions. Moreover, the present invention allows obtaining a strategy design strictly oriented to the industrial process to be controlled, improving the quality of the design and the efficiency of the information flow.

It is well known that the design of strategies for regulating and controlling an industrial process is performed adopting structured methods that define exactly the acquisition and the management of the information needed.

Such methods use massively project documentation useful for defining control and regulation diagram. Typical examples of project documentation are the well known "P&IDs" (Process and Instrumentation Diagrams) or the so-called "Information Databases" and the "Process Descriptions".

In practise, project documentation is a collection of information regarding the industrial process and its related control function.

The control and regulation strategy design methods known in the state of the art are unfortunately affected by some drawbacks.

First of all, the kind of approach commonly used, reduces remarkably the possibility of re-using design solutions which have already been adopted and tested. Actually, the activity of evaluating if an already considered strategy is suitable for controlling effectively a new industrial process requires a considerable effort, given the fact that a lot of documentation has to be examined in details. In fact, information regarding the controlled industrial process has to be extracted from a large amount of information often redundant.

Moreover, traditional methods require the manual editing of the information needed for the design of the process control strategies. The project documentation, available either on paper or on a computerised support, is examined and the information useful to the control strategy design is manually imported. This fact, as it can be easily understood, constitutes a considerable disadvantage due to the fact that manual editing requires a large amount of time and it can easily be a frequent source of mistakes very difficult to debug.

Furthermore, traditional methods do not allow, during the design workflow, a high level of integration between information regarding the industrial process and information regarding control instrumentation to be used. This fact makes difficult the flow of information during the design of the control strategies.

It is an object of the present invention to provide a method, for designing strategies for the regulation and control of an industrial process, which allows to import automatically information into a predefined computerised support and, in the same time, which allows to perform a design strictly oriented to the industrial process to be controlled.

A further object of the present invention is to provide a method for designing strategies for the regulation and control of an industrial process which allows to easily re-use design solutions which have already been adopted and tested so as to improve effectively the efficiency of the design workflow.

An other object of the present invention is to provide a method for designing strategies for the regulation and control of an industrial process which allows to obtain an integrated management of information regarding the process and the control instrumentation in the design workflow.

Thus, the present invention relates to a method for designing strategies for the regulation and control of an industrial process which is characterised by the fact of comprising the following phases:
a) importing automatically, into a first predefined computerised support, information regarding the industrial process and its related control functions, said information being imported from one or more second computerised supports which are put in communication with said first predefined computerised support;
b) executing, in said first predefined computerised support, a selection of the information imported in said phase a);
c) executing, in said first predefined computerised support, a logic decomposition of said industrial process in a plurality of modules, and introducing, into one or more of said modules, the information imported in said phase a) and selected in said phase b).

The present invention will now be described in more detail with reference to a number of embodiments in accordance to the invention which are given by way of example and which are shown in the accompanying drawings in which:
- figure 1 is a schematic view of the succession of phases which is implemented in a preferred embodiment of the method as in the present invention;
- figure 2 is a schematic view of the succession of steps which is performed in a phase implemented in a preferred embodiment of the method as in the present invention;
- figures 3-4 illustrate an example of implementation of a preferred embodiment of the method as in the present invention;
- figure 5 illustrates an other example of implementation of a preferred embodiment of the method as in the present invention;
- figures 6-8 illustrate a further example of implementation of a preferred embodiment of the method as in the present invention.

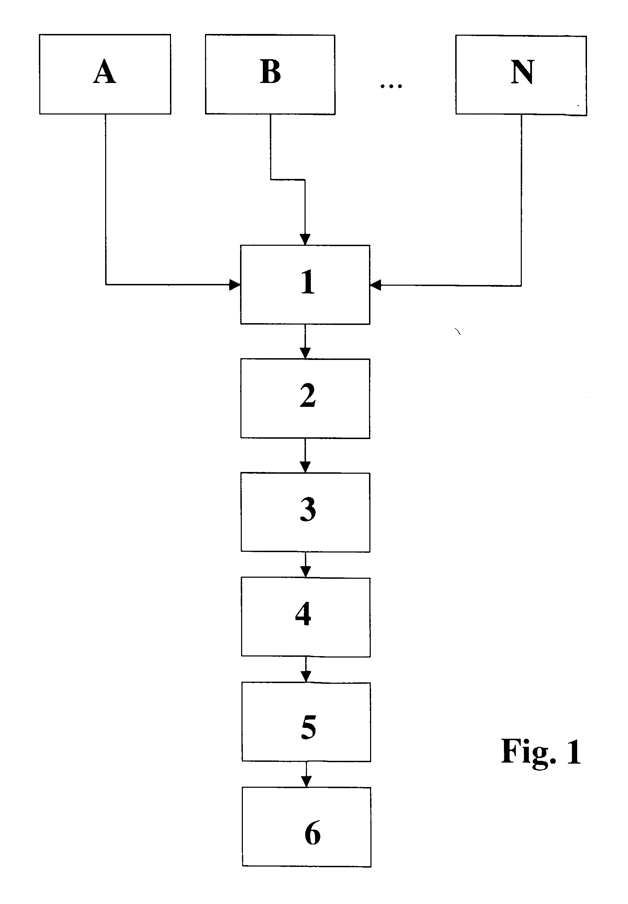

Referring to figure 1, a schematic view of the succession of phases which is implemented in a preferred embodiment of the method as in the present invention is represented.

At phase a), indicated by reference number 1, information regarding the industrial process and its related control functions is automatically imported into a first predefined computerised support (not illustrated in figure 1). The importation is performed from one or more second predefined computerised supports indicated in figure 1 by the letters A..N.

Examples of imported information can be said "P&IDs" or said "Information Databases" or said "Process Descriptions" which are stored on said second computerised supports.

Said second computerised supports are put in communication with said first computerised support. This can be obtained considering technologies that arc well known in the state of the art So, if said second computerised supports are physically separated by said first computerised support, the communication can be established by hardware means such as for example communication cables or also wireless systems supported by opportune software interface programs. On the other side, if said first and second computerised supports are located on the same physical hardware (e.g. the same elaboration unit), communication among them can be established by opportune software interface programs. Said programs are able to make compatible the various formats that are used by said first and second computerised supports.

Said second computerised supports can be very different from each other and can be represented, for example, by the various CAD (Computer Aided Design) environments generally used to produce the project documentation. The first computerised support can be represented, for example, by a properly configured software environment. Software platforms, such as Windows NT®, commercially available on the market can be easily used by those skilled in the art.

In the phase b), indicated by the reference number 2, a selection of the information imported in said phase a) is executed. In practice, given the fact that the project documentation is often redundant, only information necessary to the strategy design is selected.

Once the necessary information is available, in phase c) a logic decomposition of the industrial process into a plurality of modules is executed (reference number 3). One or more of said modules, described in details hereinafter, comprise the information imported in said phase a) and subsequently selected in said phase b), said information being inserted (reference number 4) into said modules during phase c).

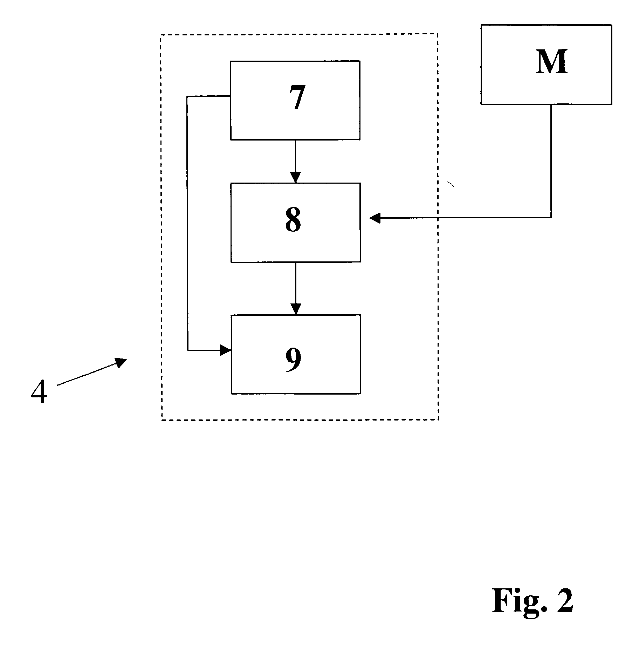

Referring now to figure 2, the succession of steps which is performed in said phase c), is represented. In particular, the steps regarding the insertion of information into said modules (reference number 4 of figure 1) are described.

At step c.1) (reference number 7), among the information processed in said phases a) and b), information regarding a predefined portion of the industrial process and its related control functions, is identified.

At step c.2) (reference number 8), said information is integrated with information not imported automatically but obtained through manual editing, schematically indicated by block M, using predefined storage means that can be, for example, databases, libraries or paper documentation. As it can be noticed in figure 2, step c.2) can be considered if it is necessary, otherwise step c.3) can be directly executed.

At step c.3) clusters of information are selected, among information processed at steps c.1) and/or c.2). Said clusters of information are then inserted, at step c.4), into one or more of the modules belonging to the plurality of modules used for the logic decomposition of the industrial process (reference number 3 of figure 1). Referring again to figure 1, the method as in the present invention comprises, in a preferred embodiment, also the phases described hereinafter.

At phase d) (reference number 5) the definition of a hierarchical structure is provided. The main characteristic of said hierarchical structure is the fact that every node is represented by a module belonging to the plurality of modules used for the logic decomposition of the industrial process. Said structure can be preferably a tree-shaped structure in which all the nodes are connected each other by connecting arcs. In practice, after the logic decomposition in a plurality of modules, the industrial process can be entirely represented by said hierarchical structure containing all the information necessary to the control strategy design.

At phase e) (reference number 6), for each module belonging to said hierarchical structure, input/output connecting terminals are defined. Said terminals are the interfaces used by each module belonging to said hierarchical structure for exchanging control and/or process variables and parameters. In practice, they are locations, internal to each module, in which parameters and variables to exchange can be stored. Connecting terminals can represent either process physical terminals, corresponding to a not-causal physical connection, or, alternatively, process control terminals, corresponding to a causal connection, through which exchanges of information are performed.

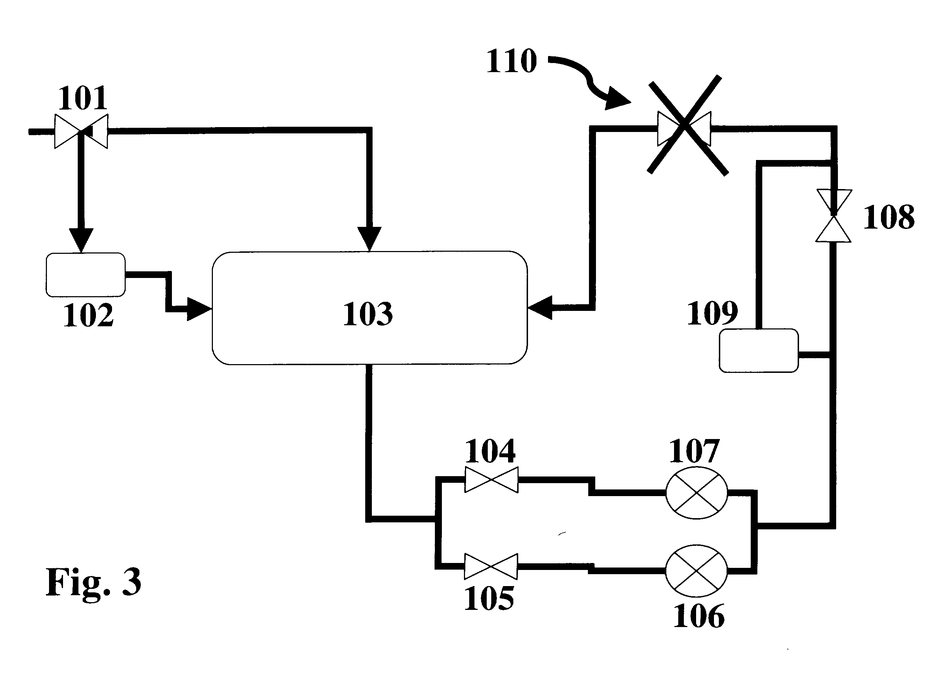

Those skilled in the art can easily understand that the definition of the hierarchical structure and of the connecting terminals described above, are used for establishing organically correlations among the various modules and, consequently, among the pieces of information comprised in each of them. This fact corresponds to a logical organisation of all the portions in which the industrial process has been decomposed. Referring now to figures 3-4, an example of implementation of a preferred embodiment of the method as in the present invention is illustrated.

In figure 3, a simplified example of an industrial process and its related control functions is represented as described in a P&ID comprised in the project documentation. The P&ID comprises information related to:
- a valve 101 and related controller 102 for temperature control;
- a reservoir 103;
- pumps 107 and 106 and their related valves 104 and 105;
- a valve 108 and related controller 109 for pressure control;
- a manual valve 110.

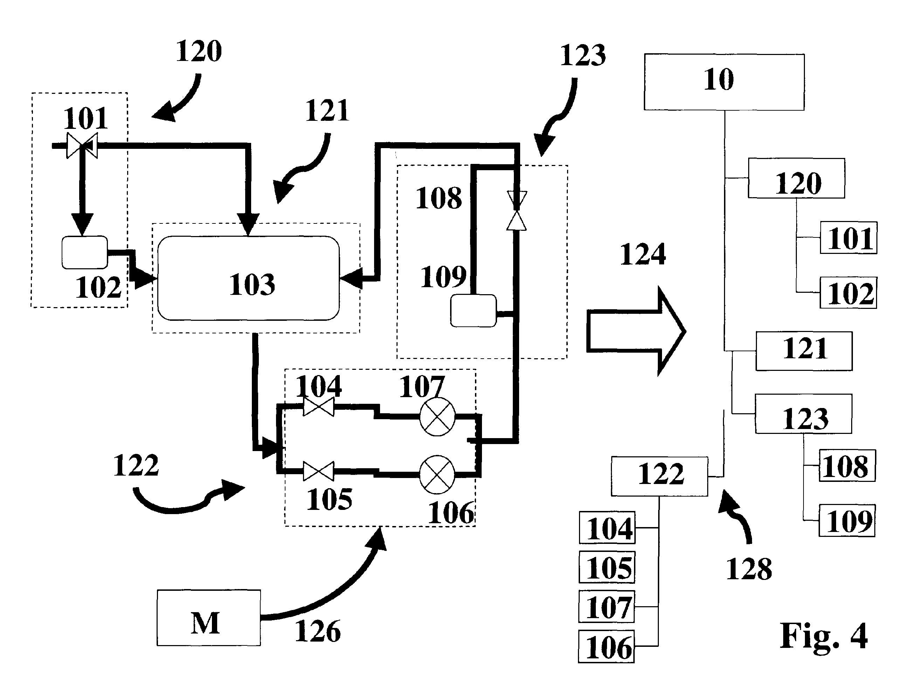

During the phase a) of the method according to the present invention, the P&ID described in figure 3, is imported automatically from the CAD environment in which it has been performed. During the phase b) the pieces of information necessary to the design are selected. In this case, the information related to the valve 110 is deleted. Then, referring now to figure 4, information related to predefined portions of the industrial process is identified (step c.1)). For example, block 120 comprises information regarding the temperature control. This information can be integrated (step c.2)), as in the case of block 122, with information 126 imported not automatically. Subsequently, clusters of information are selected (step c.3)). The insertion of said clusters (indicated in figure 1 by reference number 4) into each of the modules in which the industrial process has been decomposed during step c.4), is now represented by arrow 124. The modules can he organised according to a hierarchical tree-structure defined in phase d). Each of the modules is a node of said tree-structure: hierarchical connections are defined among the nodes by arcs 128.

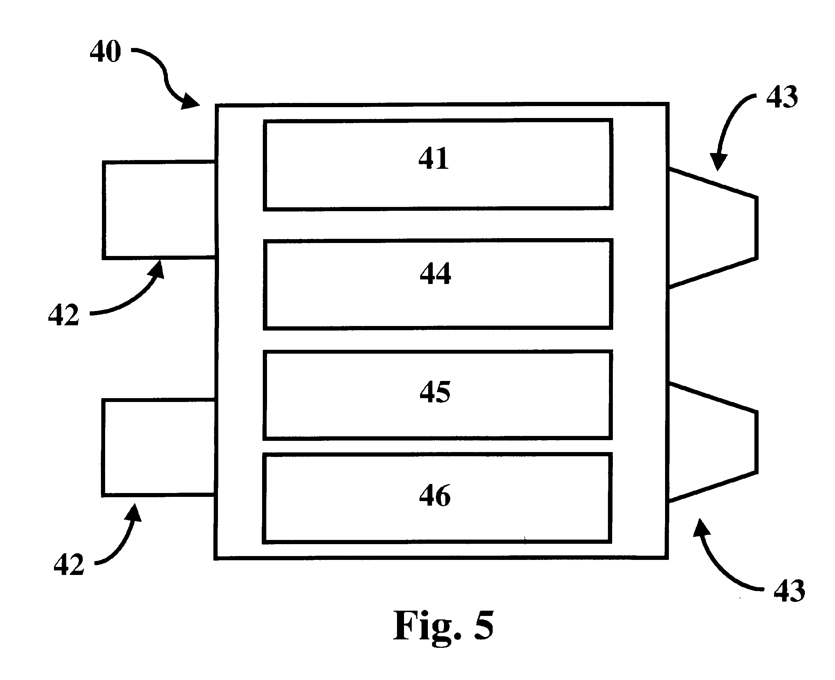

Obviously, the described succession of phases can be easily applied to industrial processes, which is much more complicated than that described in figure 4. Referring to figure 5, it is described how the information comprised in each module (in

Figure 5 indicated by reference 40) is structured in a preferred embodiment of the method as in the present invention.

Preferably, information inserted into each module 40 comprises the pieces described hereinafter:
i) an executable model of the portion of the industrial process associated to the module 40. Information, comprised in said executable model, is preferably structured as follows:
   - a topologic description in which all the physical elements involved in the portion of the industrial process associated to the module 40, are listed;
   - a description of said portion of the industrial process in terms of equations and formula which can be processed by a simulating engine. The simulating engine can he one of those available on the market (for example the simulating engine APROS®)and well known to those skilled in the art;
   - a functional description of the control and regulating strategies related to the portion of the industrial process associated to the module 40.
      The executable model is globally indicated in figure 5 by the reference 41. The executable model 41 uses variables and parameters which can be exchanged through the connecting terminals which, as mentioned above, can represent both physical (reference 42) and control (reference 43) process connections. Variables have values determined by the available simulating engine and they are defined by the attributes of type, measuring unit, domain, name and comment. Parameters have predefined values and are defined by the attributes of type, measuring unit, domain, name, comment and value.
      The executable model itself is characterised by the attributes of type, which comprises information related to the formalism representing the model, and of description, which comprises information related to the relations between variables and parameters;
ii) a variable indicating the state of the module to which said variable belongs (reference 44 in figure 5). Said variable can have the following values:
   - aggregate: it specifies that in the module 40 pieces of information regarding both portions of process and control functions are present;
   - elementary control: it specifies that in the module 40 information regarding control functions is present only;
   - elementary process: it specifies that in the module 40 information regarding process portions is present only;
   - elementary hybrid: it specifies that the module 40, even if it is aggregate, is not the root of the hierarchical tree structure;
iii) an aggregated structure describing the composition of a module in terms of other modules having lower hierarchical level (reference 45 in figure 5). Said aggregated structure can comprise:
   - a list of the modules having lower hierarchical level;
   - a list of connections between said modules having lower hierarchical level.
iv) an alpha-numeric string in which comments are inserted (reference 46 of figure 5).
   It appears evident to those skilled in the art that, thanks to the internal structure of each module. as in the preferred embodiment described above, the industrial process to be controlled can be represented effectively by a plurality of modules similar to module 40.

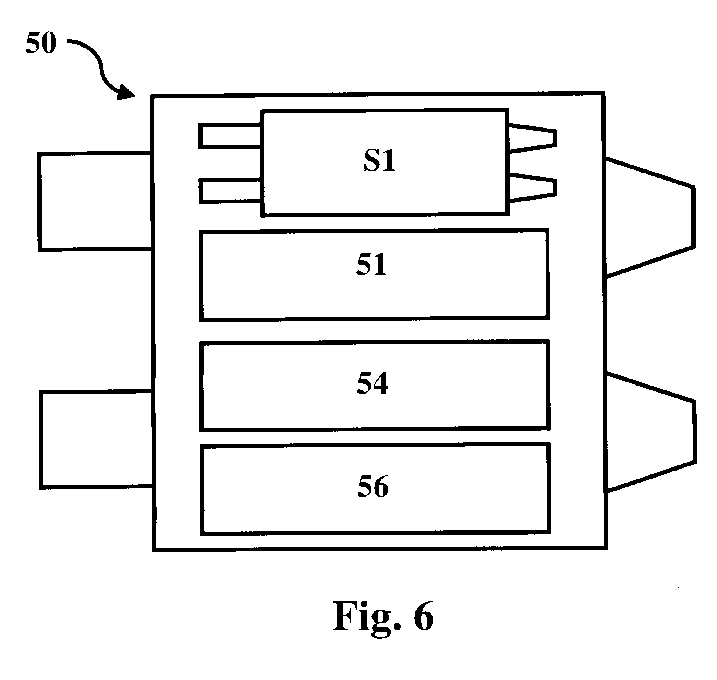

With reference to figure 6, an example explaining the previous concept is reported. With the reference 50 a module comprising a controlled subsystem, with controlled valves CV1 and CV2 and a pipe P1, is indicated. Information inserted into the module 50 comprises a model 51 regarding the associated portion of industrial process, a variable 54 indicating the state of the module, an alpha-numeric string 56 and an aggregated structure, describing the mentioned subsystem.

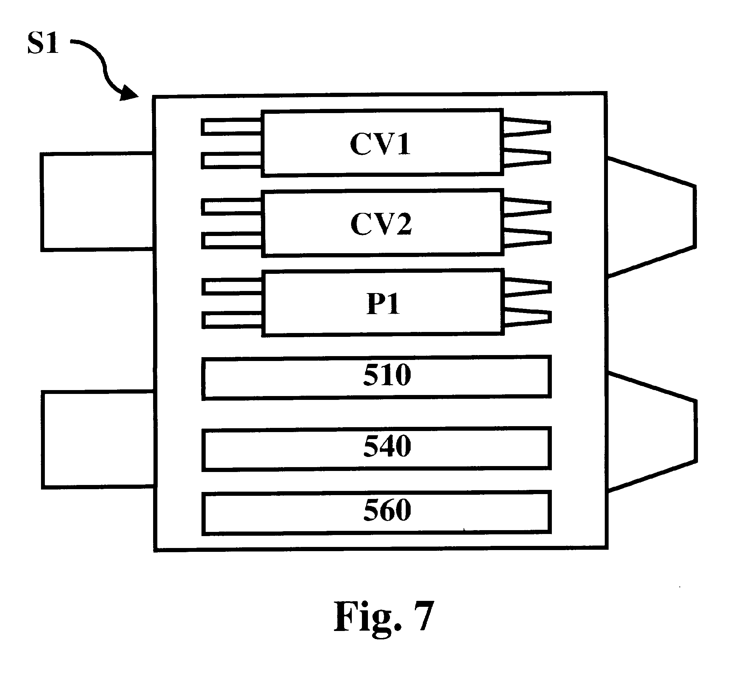

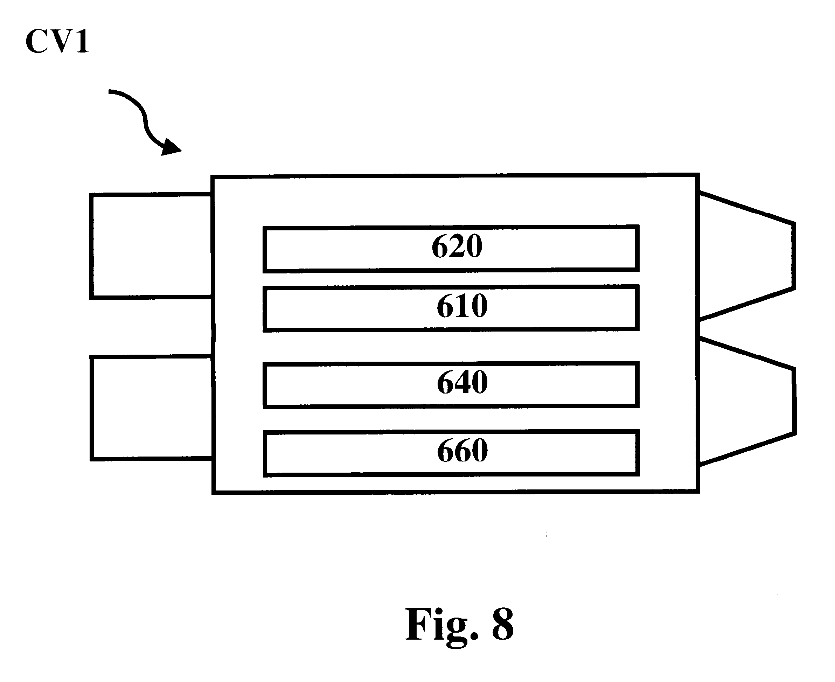

Referring to figures 7 and 8 it can be observed that the aggregation structure S1 is a module whose inserted information comprises an executable model 510, a variable indicating the state of the module 540, an alpha-numeric string 560 and some aggregated structures describing valves CV1, CV2 and the pipe P1. In turn, the aggregated structures CV1, CV2 and P1 are modules whose inserted information is structured similarly to those already described. For example, the aggregated structure CVI is provided with an aggregated structure 620, a variable 640, a string 660 and an executable model 610. The aggregated structure 620 is void if CV1 is a leaf of said hierarchical tree-shaped structure, used to decompose the industrial process.

From the example above described, it appears evident the hierarchical tree-structure which has been used to decompose the industrial process to be controlled.

The method as in the present invention has proven to fulfil all the intended objects.

First, the method as in the present invention allows obtaining an automatic acquisition of information necessary to the strategy design. This fact represents a remarkable improvement in terms of reliability, effectiveness and time-savings with respect of the traditional design methods.

Further, due the fact that the method as in the present invention considers a logic decomposition of the industrial process to be controlled, a design strictly oriented to the industrial process is necessarily obtained. This fact allows obtaining a better design architecture of the control strategies with relevant saving of time and costs.

The re-use of solutions already considered and tested is effectively allowed. This is possible due to the hierarchical structure used to decompose the industrial process: pieces of said hierarchical structure can be used easily to decompose and describe a new industrial process to be controlled.

Due to its structure, and particularly thanks to the hierachical structure which is used in said method, the method as in the present invention necessarily allows to reach an high level of integration between information regarding the process and information regarding the instrumentation control. In fact, in each module of said hierarchical structure, both these kinds of information are present.

Finally, the method as in the present invention has proven to be of relatively easy and low cost realisation. In fact, it can be implemented easily on HW/SW platforms already available on the market and well known to those skilled in the art.

The foregoing description of preferred embodiments of the method as in the present invention has been presented for purposes of illustration. It is not intended to be exhaustive or to limit the invention to the precise forms disclosed and obviously many modifications and variations are possible in light of the above teaching.

In practice many variations may suggest themselves to those skilled in the art within the scope of the invention disclosed herein.

## Claims

1. A method for designing strategies for the regulation and control of an industrial process characterised by the fact of comprising the following phases:
a) importing automatically, into a first predefined computerised support, information regarding the industrial process and its related control functions, said information being imported from one or more second computerised supports which are put in communication with said first predefined computerised support;
b) executing, in said first predefined computerised support, a selection of the information imported in said phase a);
c) executing, in said first predefined computerised support, a logic decomposition of said industrial process into a plurality of modules and introducing, into one or more of said modules, the information imported in said phase a) and selected in said phase b).

2. A method for designing strategies for the regulation and control of an industrial process, as in claim 1, characterised by the fact said phase c) comprises the following steps:
c.1) identifying, in the information processed at phases a) and b), information regarding a predefined portion of the industrial process and its related control functions;
c.2) integrating, if necessary, said information processed at said step c.1) with information imported not automatically;
c.3) selecting, in the information processed at said steps c.1) and/or c.2), clusters of information;
c.4) inserting said clusters of information into one or more of said modules.

3. Method for designing strategies for the regulation and control of an industrial process, as in claim 2, characterised by the fact said information imported not automatically is obtained through manual editing and/or using predefined storage means.

4. Method for designing strategies for the regulation and control of an industrial process, as in one or more of the previous claims, characterised by the fact of comprising the following phases:
d) defining, in said first computerised support, a hierarchical structure, each node of said hierarchical structure being a module of said plurality of modules;
c) defining, for each module belonging to the hierarchical structure of phase d), input/output connecting terminals used for exchanging control and/or process variables and parameters.

5. Method for designing strategies for the regulation and control of an industrial process, as in claim 4, characterised by the fact said hierarchical structure is a tree-shaped structure whose nodes are connected each other by connecting arcs.

6. Method for designing strategies for the regulation and control of an industrial process as in one or more of the previous claims, characterised by the fact that the information inserted into each module of said hierarchical structure comprises an executable model of the portion of the industrial process associated to said module.

7. Method for designing strategies for the regulation and control of an industrial process, as in one or more of the previous claims, characterised by the fact that the information inserted into each module of said hierarchical structure comprises a variable indicating the state of said module.

8. Method for designing strategies for the regulation and control of an industrial process, as in one or more of the previous claims, characterised by the fact that the information inserted into each module of said hierarchical structure comprises an aggregated structure describing the module composition in terms of other modules having lower hierarchical level.

9. Method for designing strategies for the regulation and control of an industrial process, as in one or more of the previous claims, characterised by the fact that the information inserted into each module of said hierarchical structure comprises an alpha-numeric string.

10. Method for designing strategies for the regulation and control of an industrial process, as in claim 6, characterised by the fact that said executable model is defined by the attributes of type and description.

11. Method for designing strategies for the regulation and control of an industrial process, as in claim 10, characterised by the fact that said executable model comprises a topologic description of the portion of the industrial process associated to the module to which said executable model belongs.

12. Method for designing strategies for the regulation and control of an industrial process, as in claim 10, characterised by the fact that said executable model comprises a description in terms of equations and formula of the portion of the industrial process associated to the module to which said executable model belongs.

13. Method for designing strategies for the regulation and control of an industrial process, as in claim 10, characterised by the fact that said executable model comprises a functional description of the control and regulating strategies related to the portion of the industrial process associated to the module to which said executable model belongs.
